# EUROPÄISCHE PATENTSCHRIFT

(11) **EP 3 283 418 B1**
(45) Veröffentlichungstag und Bekanntmachung des Hinweises auf die Patenterteilung: **19.06.2019**
(21) Anmeldenummer: 15715747.0
(22) Anmeldetag: 14.04.2015
(51) Int. Cl.: B65G 63/00, B66C 19/00, B65G 63/04

(54) **VERFAHREN UND CONTAINER-UMSCHLAGANLAGE ZUM EIN- UND AUSLAGERN VON CONTAINERN IN CONTAINERLAGERN**
METHOD AND CONTAINER TRANSFER INSTALLATION FOR PLACING CONTAINERS INTO AND REMOVING CONTAINERS FROM CONTAINER STORAGE AREAS
PROCÉDÉ ET INSTALLATION DE TRANSBORDEMENT DE CONTENEURS SERVANT METTRE EN STOCK ET À RETIRER DU STOCK DES CONTENEURS DANS DES ENTREPÔTS DE CONTENEURS

(43) Veröffentlichungstag der Anmeldung: 21.02.2018
(73) Patentinhaber: AMOVA GmbH, 57250 Netphen (DE)
(72) Erfinder: HEIDE, Carsten, 57250 Netphen (DE); BRÜCK, Volker, 57555 Mudersbach (DE); BANNERT, Michél, 56244 Hartenfels (DE)
(74) Vertreter: Grosse, Wolf-Dietrich Rüdiger
(86) Internationale Anmeldenummer: PCT/EP2015/058094
(87) Internationale Veröffentlichungsnummer: WO 2016/165748

(56) Entgegenhaltungen:
- DE-C1- 4 439 740
- US-A- 5 039 275
- US-A1- 2010 239 402

## Beschreibung

Die Erfindung betrifft ein Verfahren zum Ein- und Auslagern oder Umlagern von Containern in Hochregal- oder Blocklager eines See- oder Binnenhafens innerhalb einer Container-Umschlaganlage mit integriertem, vollautomatischem Containertransportsystem, umfassend zum Umschlag der Container von einem Schiff auf Land und umgekehrt mindestens eine Verladebrücke und mindestens einen Lagerkran, mit dem die Container im Lager ein- und ausgelagert oder umgelagert werden, wobei im Umschlagablauf zwischen einer Verladebrücke und den Lagerkranen für die Container mehrere Höhenebenen vorgesehen sind. Des Weiteren betrifft die Erfindung eine Container-Umschlaganlage zum Durchführen des Verfahrens.

Durch die EP 1 272 414 B1 ist eine Umschlaganlage in einem See- und Binnenhafen für insbesondere Standard-Container, wie 20 TEU- oder 40 FEU-Container, mit einem entlang eines Kais vorgesehenen, aus einzelnen zeilenartigen Lagermodulen bestehendem Containerlager in Form eines Blocklagers und mindestens einer mit den Lagermodulen zusammenwirkenden Ladeanlage für den Lastumschlag von und zu einem am Kai liegendem Schiff bekannt geworden. Die Ladeanlage für den Lastumschlag ist mit mindestens einem verfahrbaren Hafenmobilkran ausgerüstet. Dessen verschwenkbarer Lastausleger reicht in den Bereich mindestens eines innerhalb des aus einer Anzahl von Lagermodulen mit einer von der Modulbreite abhängigen Anzahl von Containerreihen bestehenden Containerlagers vorgesehenen, eine Schnittstelle zwischen dem Hafenmobilkran und den Lagermodulen des Containerlagers bildenden Übergabeplatzes.

Ein von dem verschwenkbaren Ausleger des Hafenmobilkrans auf dem Übergabeplatz abgesetzter Container wird dort direkt von einem Lagerkran ergriffen, der den Horizontaltransport und das Stapeln der Container übernimmt. Der Lagerkran ist als aufgeständerter Brückenkran mit einer Laufkatze ausgebildet und überspannt jeweils ein z. B. neun Container breites und drei bis vier Container hohes Lagermodul des quer zum Kai verlaufenden Containerlagers. Die Lagermodule sind durch mindestens zwei auf quer zu den einzelnen Lagermodulen in unterschiedlichen horizontalen Ebenen verlaufenden Schienenbahnen verfahrbare, unabhängig voneinander agierende Quertransporter miteinander verknüpft. Die Container werden übereinander gestapelt, wobei die Stapelhöhe durch die Tragfähigkeit der einzelnen Container limitiert wird; in einem Blocklager werden daher in der Regel maximal sechs Container übereinander gestapelt.

Aus der DE 10 2008 007 860 A1 ist es bekannt, Container in beliebiger Anzahl, über- und nebeneinander, einzeln in Regalfächer eines Hochregallagers ein- bzw. auszulagern. Die Container werden dabei mittels eines jeweils eine Gasse zwischen zwei benachbarten Lagermodulen überspannenden Brückenkrans einzeln zugänglich und mit etwas Luft übereinander in die mehrgeschossigen Regalfächer eingebracht, die an beiden Längsseiten, der Breite der mit ihren Stirnseiten in das Regal eingebrachten Container entsprechend, in Richtung der Regaltiefe mit Fahrschienen ausgerüstet sind. Der über den Gassen verfahrbare Brückenkran trägt eine mittels Seilen heb- und senkbare Containeraufnahme, die auf einer mit Laufschienen ausgerüsteten Übergabebrücke angeordnet ist und an ihren Enden über motorisch oder hydraulisch höhenverstellbare, mit eckseitigen Anhängepunkten der Container verriegelbare Containergreifer verfügt. Zur Anpassung an unterschiedliche Längen der Container weist die Containeraufnahme in der Länge verstellbare Tragholme auf, an denen die Containergreifer vorgesehen sind.

Bei einem aus der DE 4439740 C1 bekannten Container-Terminal nach dem Oberbegriff der Ansprüche 1 und 6, werden hohe Umschlagzahlen, wie sie beispielsweise durch den Einsatz von mehreren Verlade- bzw. Containerbrücken an einem Schiff gewährleistet werden müssen, durch ein innerhalb einer Container-Umschlaganlage integriertes vollautomatisches Containertransportsystem im Zusammenspiel mit den Lagerkranen erreicht. Dazu sind auf einer höhenversetzten stufenförmigen Tragkonstruktion durch mehrere Stützen miteinander verbundene, höhenversetzte Fahrbahnebenen mit Be- und Entladepositionen angeordnet, wobei jede Ebene ein Fahrbahnnetz mit einer Vielzahl darauf fahrbarer, linearmotorbetriebener Transportpaletten aufweist. Abgesehen davon, dass sehr viele mit Linearmotorantrieben als berührungslose Antriebsmittel spezial ausgebildete Transportpaletten notwendig sind, ist mit der Fahrbahnen-Vernetzung ein großer Stahlbau-Aufwand unvermeidlich. Denn jede Ebene besitzt mehrere miteinander verbundene Fahrbahnen zum Bewegen der Transportpaletten auf einem Fahrbahnnetz zu Be- und / oder Entlade- und / oder Zulagerpositionen. Die verschiedenen bzw. einzelnen, durch Stützen miteinander verbundenen Ebenen werden durch eine stufenförmig höhenversetzte Tragkonstruktion vorgegeben.

Der Erfindung liegt die Aufgabe zugrunde, ein Verfahren und eine Container-Umschlaganlage der eingangs genannten Art zu schaffen, die in einfacher Weise einen sicheren und insbesondere auch bei sehr hohen Stückzahlen beschleunigten, schnellen Container-Umschlag ermöglichen. Dabei soll der Anlagenaufwand durch weitestgehende Ausnutzung der ohnehin schon vorhandenen Einrichtungen (Verlade- bzw. Containerbrücken, Hochregal- oder Blocklager-Aufbauten, Lager- bzw. Brückenkrane, in den Gassen eines Hochregallagers verfahrbare Bediengeräte) verringert werden.

Diese Aufgabe wird mit einem Verfahren erfindungsgemäß nach Anspruch 1 dadurch gelöst, dass einzelne Container von der mindestens einen Verladebrücke sukzessive an auf einem zumindest jeweils eine obere und eine untere Aufnahme- und Förder-Ebene aufweisenden, parallel zum Containerlager verfahrbaren Übernahmewagen bereitgestellten Paletten oder Querförderwagen abgegeben werden, von dem die mit einem Container beladenen Paletten durch Paletten-Querfördermittel oder die Container durch die Querförderwagen des Übernahmewagens auf ein parallel zum Containerlager verfahrbares, in Linie vor dem Übernahmewagen positioniertes, wie der Übernahmewagen eine obere und eine untere Ebene aufweisendes Endverteilerfahrzeug und von diesem mit Querfördermitteln auf eine stationäre, ebenfalls eine obere und eine untere Ebene aufweisende Transferstation des Containerlagers übergeleitet werden, aus der ein Lagerkran die Container zur Einlagerung im Containerlager abhebt.

Es lässt sich damit ein entkoppelter, sehr hohe Stückzahlen bewältigender Container-Umschlag im kontinuierlichen Betrieb aller beteiligten Komponenten erreichen. So können z. B. einer Verladebrücke und dem damit zusammenwirkenden Übernahmewagen zwei oder abhängig von der Leistungsfähigkeit der Verladebrücke mehrere Endverteilerfahrzeuge zugeordnet werden. Sobald das erste Endverteilerfahrzeug die Container aus den beiden Ebenen - im Folgenden statt Aufnahme- und Förder-Ebene stets kurz nur Ebene genannt - bzw. in einer optionalen Ausführung des Endverteilerfahrzeugs mit Paletten-Rückführung auf der unteren Ebene aus der oberen Ebene des Übernahmewagens entnommen hat und damit beladen ist, kann es zum weiteren Handling der Container zu einer von mehreren stationären Transferstationen des Containerlagers verfahren werden und gleichzeitig das zweite Endverteilerfahrzeug zur Bestückung mit folgenden Containern positioniert werden. Beim gleichzeitigen Betrieb mit mehreren Verladebrücken ist vorzugsweise jeder Verladebrücke ein Übernahmewagen zugeordnet. Zum abschnittsweisen Ent- oder Beladen des Schiffes mit nur einer Verladebrücke kann diese wie ebenso der zugehörige Übernahmewagen am Kai zum jeweiligen Abschnitt verfahren werden. Wenn die Breite der Ebenen der beteiligten Komponenten nach der größten Containerabmessung ausgelegt ist, können statt eines 40 FEU-Containers in jeder Ebene zwei 20 TEU-Container gleichzeitig umgeschlagen werden.

Nach einer Ausgestaltung der Erfindung werden der Übernahmewagen und das Endverteilerfahrzeug schienengebunden verfahren, was die fluchtende Positionierung der Fahrzeuge mit ihren Ebenen zueinander begünstigt.

Ein Vorschlag der Erfindung sieht vor, dass bei Ausbildung des Containerlagers als Hochregallager der Übernahmewagen und das Endverteilerfahrzeug auf hochgeständerten Schienen verfahren werden und die stationäre Transferstation in den beiden obersten Etagen des Hochregallagers vorgesehen wird, wobei den beiden Ebenen des Übernahmewagens entsprechende Übernahmeebenen des Endverteilerfahrzeugs ortsfest installierte Lastaufnahmemittel sein können oder ein vertikal verstellbares Lastaufnahmemittel des Endverteilerfahrzeugs wird auf der jeweils zu bedienenden Ebene positioniert. Aufgrund der Höhe der Fahrbahnen muss die Verladebrücke die Container nicht auf das Kaibodenniveau absenken. Durch den weitestgehenden Wegfall der vertikalen Absenkbewegung lassen sich der Energieeinsatz und ergänzend zu der durch die Entkopplung der Funktionen schon erreichten Beschleunigung auch die Zykluszeit weiter verringern.

Die Erfindung sieht in bevorzugter Weise vor, dass ein vorderer, der Kaiseite zugewandter Abschnitt der Paletten-Querfördermittel des Übernahmewagens und ein hinterer, in Richtung des Containerlagers weisender Abschnitt der Paletten-Querfördermittel der stationären Transferstation aus der unteren Ebene in die obere Ebene und umgekehrt abgesenkt bzw. angehoben werden können, wobei die Paletten-Querfördermittel sowohl in der abgesenkten als auch angehobenen Endposition in Flucht mit Paletten-Querfördermitteln des zwischengeschalteten Endverteilerfahrzeugs verlaufen. Der Übernahmewagen wird bei abgesenktem vorderem Abschnitt mit einer Palette bzw. zwei nebeneinander liegenden Paletten in der unteren Ebene beladen, wobei dann allerdings nach dem Anheben des vorderen Abschnitts und Beladung der Paletten mit einem Container die Weiterleitung der Container über nur die obere Ebene des Endverteilerfahrzeugs erfolgt. In der stationären Transferstation werden die auf der oberen Ebene des Endverteilerfahrzeugs ankommenden Container sukzessive von dem Lagerkran oder zwei Lagerkranen zur Einbringung in das Containerlager übernommen. Die entladenen Paletten werden dann sukzessive auf die untere Ebene abgesenkt und durch Querfördern zum erneuten Einsatz zum Übernahmewagen zurücktransportiert. Bei einem Hochregallager geben die Lagerkrane die Container zum weiteren Handling an in den Lagergassen zu den jeweiligen Regalfächern verfahrbare Regalbediengeräte ab.

Die vorbeschriebene Betriebsweise macht es möglich, dass erfindungsgemäß leere Paletten nach dem Absenken in die untere Ebene von der stationären Transferstation über die untere Ebene des Endverteilerfahrzeugs zurück zur unteren Ebene des Übernahmewagens befördert werden können. Es lässt sich damit ein geschlossener Paletten-Kreis- bzw. -Umlauf erreichen, für den z. B. sechs zum Einsatz kommende Paletten benötigt werden. Auch hierbei dient das Endverteilerfahrzeug als Bindeglied von der Transferstation zum Übernahmewagen.

Eine erfindungsgemäße Container-Umschlaganlage nach Anspruch 6, zur Durchführung des Verfahrens ist dadurch gekennzeichnet, dass einer Verladebrücke zum Containerlager hin auf jeweils parallel zum Containerlager verlaufenden Fahrbahnen zunächst ein Übernahmewagen und angrenzend zum Containerlager mindestens ein Endverteilerfahrzeug zugeordnet ist, wobei das Endverteilerfahrzeug unabhängig von dem Übernahmewagen verfahrbar und fluchtend zu einer an der Zuförderseite des Containerlagers mindestens ausgebildeten, im Wirkbereich eines Lagerkrans angeordneten, stationären Transferstation positionierbar ist, wobei der Übernahmewagen, das Endverteilerfahrzeug und die stationäre Transferstation jeweils zumindest mit einer oberen und einer unteren Aufnahme- und Förder-Ebene und dort vorgesehenen Container- und / oder Paletten-Querfördermitteln ausgebildet sind. Die entkoppelten Funktionen der verschiedenen Container-Handhabungskomponenten ermöglichen einen variablen, schnellen Umschlag, wobei lediglich das Endverteilerfahrzeug wechselweise mit seinen Ebenen in Flucht vor dem Übernahmewagen und in Flucht vor der stationären Transferstation positioniert wird. Die Umschlagzahl kann durch den Einsatz von mehreren Übernahmewagen und insbesondere Endverteilerfahrzeugen ohne Weiteres an beliebige Logistikanforderungen angepasst werden.

Nach einer Ausgestaltung der Erfindung sind der Übernahmewagen und das Endverteilerfahrzeug schienengebunden verfahrbar, bei Ausbildung des Containerlagers als Hochregallager auf hochgeständerten Schienen. Der dadurch reduzierte Energieeinsatz und die verringerte Zykluszeit sind schon beschrieben worden.

Eine Ausführung der Erfindung sieht vor, dass die Ebenen des Übernahmewagens in einem starren Abstand zueinander vorgesehen sind und das zugeordnete Endverteilerfahrzeug als Regalbediengerät mit einem oberen und einem unteren Lastaufnahmemittel oder einem vertikal verstellbaren Lastaufnahmemittel zum aufeinanderfolgenden Abnehmen der Container aus der oberen und unteren Ebene des Übernahmewagens ausgebildet ist. Die Querfördermittel des rahmenartigen Regalbediengerätes sind vorzugsweise an den Lastmitteln vorgesehene Teleskopgabeln bzw. -arme, die die Container an ihren eckseitigen Anschlagpunkten hängend von dem Übernahmewagen bzw. bei dieser Ausführung ohne Paletten von dessen in den beiden Ebenen hin und her verfahrbar angeordneten Querförderwagen abnehmen und an die Transferstation weiterleiten.

Nach einer Ausgestaltung dieser Ausführung weist die zugeordnete stationäre Transferstation in der unteren Ebene einen gegenüber der oberen Ebene in Richtung des Containerlagers vorspringenden Querförderabschnitt auf. Die Container lassen sich somit versetzt zueinander positionieren und sind somit in beiden Ebenen für den mindestens einen Lagerkran frei zugänglich.

Eine mit auf Paletten quergeförderten Containern bevorzugte Ausführung der Erfindung sieht vor, dass der Übernahmewagen mit einer zweigeteilten oberen Ebene ausgebildet ist und einen aus der oberen in die untere Ebene und umgekehrt absenkbaren bzw. anhebbaren, vorderen Teilebenabschnitt aufweist, wobei der zugeordnete Endverteilerwagen mit einer die vom Übernahmewagen zugeförderten Container aufnehmenden, durchgehenden oberen Ebene und der vorspringende Querförderabschnitt der stationären Transferstation mit einem aus der oberen in die untere Ebene und umgekehrt absenkbarem bzw. anhebbarem Hubmittel ausgebildet ist. Durch diese Bauweise lässt sich erreichen, dass der Endverteilerwagen die mit den Containern beladenen Paletten nur auf seiner oberen Ebene weiterfördert, während die untere Ebene im Zusammenspiel mit einerseits der unteren Ebene der stationären Transferstation und andererseits nach dem Verfahren des Endverteilerwagens in Flucht mit der unteren Ebene eines Übernahmewagens die leeren Paletten in einem geschlossenen Kreislauf zum Einsatz bringt.

Es wird erfindungsgemäß vorgeschlagen, dass der vordere Teilebenenabschnitt des Übernahmewagens und der vorspringende Querförderabschnitt der stationären Transferstation mit Scherenhubtischen ausgeführt sind. Die Scherenhubtische sind mit einem dem Ebenenabstand überbrückenden Hub ausgelegt.

Die die auf Paletten abgesetzten Container transportierenden Querfördermittel können nach einem erfindungsgemäßen Vorschlag als Rollenförderer bzw. Rollenbahnen oder beim Transport der Container ohne Paletten als Querförderwagen ausgebildet sein. Die Querfördermittel sind integrierter Bestandteil der Anlagenkomponenten.

Weitere Merkmale und Einzelheiten der Erfindung ergeben sich aus den Patentansprüchen und der nachfolgenden Beschreibung von in den Zeichnungen schematisch dargestellten Ausführungsbeispielen der Erfindung. Es zeigen:

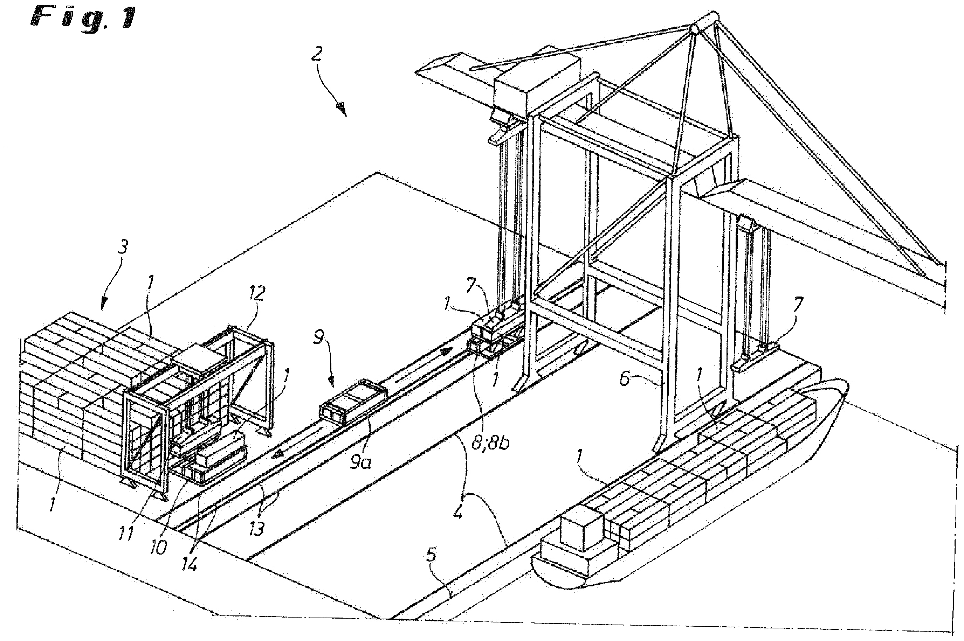

- Figur 1: eine Container-Umschlaganlage in einer perspektivischen Draufsicht mit einem am Kai zur Entladung liegenden Schiff, einer Verladebrücke, einem Übernahmewagen, einem Endverteilerwagen und einem Containerlager als Blocklager mit zuförderseitiger Transferstation und Lagerkran, wobei der Übernahmewagen, der Endverteilerwagen und die Transferstation die auf Paletten abgestellten Container auf einer oberen Ebene sukzessive querfördern, während die leeren Paletten auf einer unteren Ebene dieser Komponenten zurück transportiert werden;

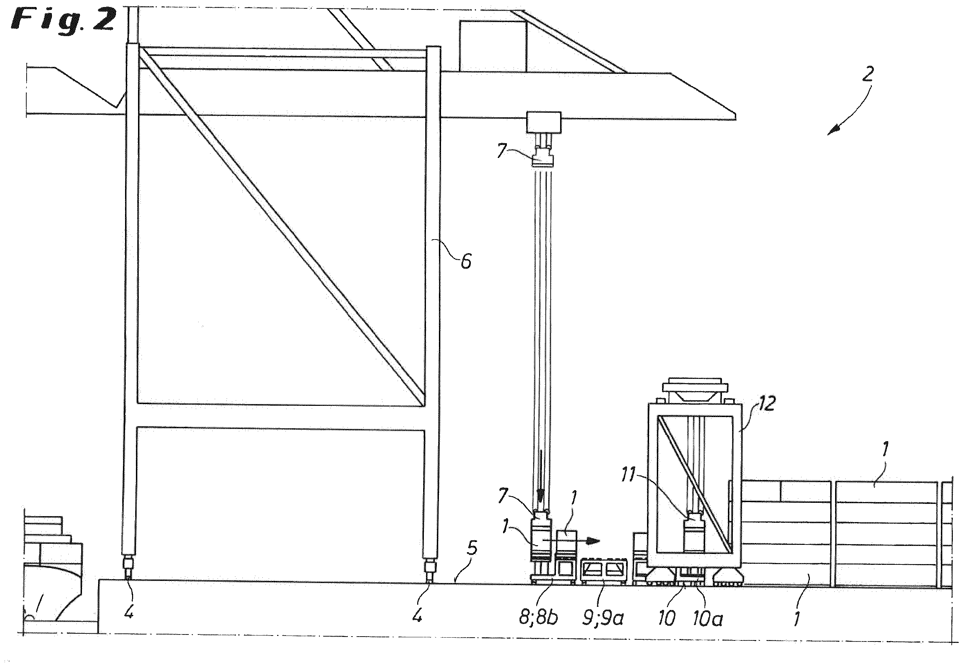

- Figur 2: den Container-Umschlagplatz der Figur 1 in einer Seitenansicht;

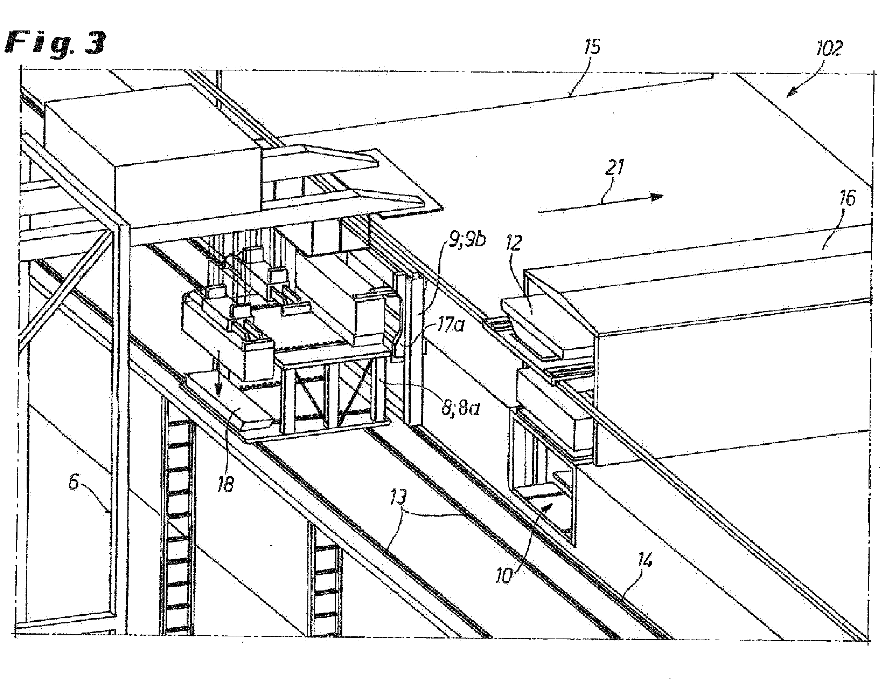

- Figur 3: in einer perspektivischen Draufsicht als Teilansicht einen Container-Umschlagplatz mit einem Hochregallager als Containerlager und auf hochgeständerten Fahrbahnen angeordnetem, zum Querfördern von Containern mittels verschiebbaren Querförderwagen sowohl auf einer oberen als auch einer unteren Ebene in anderer Ausführung ausgebildetem Übernahmewagen und Endverteilerfahrzeug;

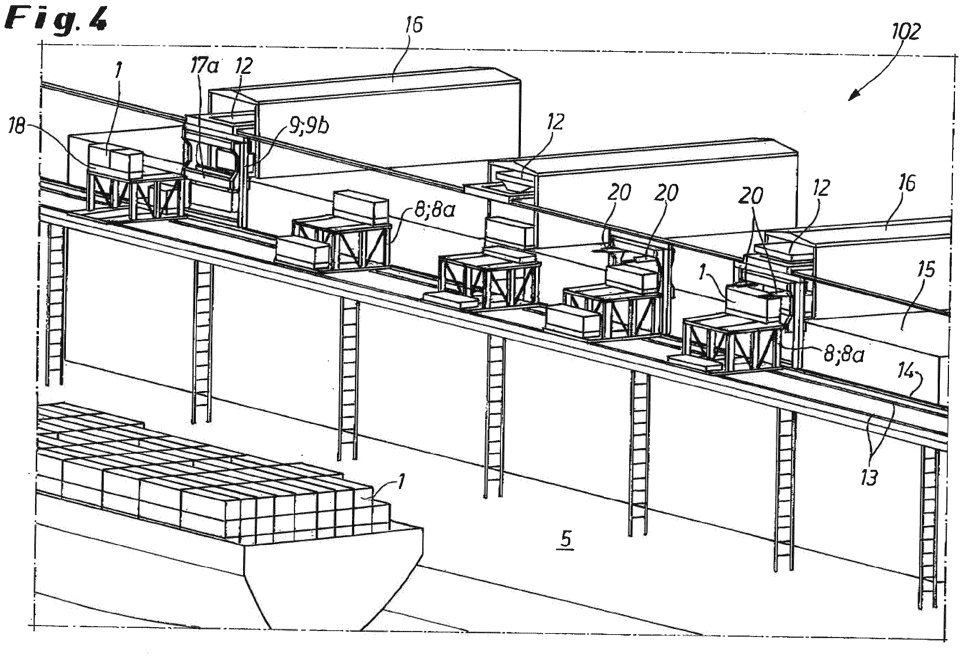

- Figur 4: als Teilansicht einer Container-Umschlaganlage in einer perspektivischen Vorderansicht das Hochregallager der Figur 3 ohne Verladebrücken mit in verschiedenen Positionen angeordneten Übernahmewagen und als Regalbediengerät ausgeführten Endverteilerfahrzeugen;

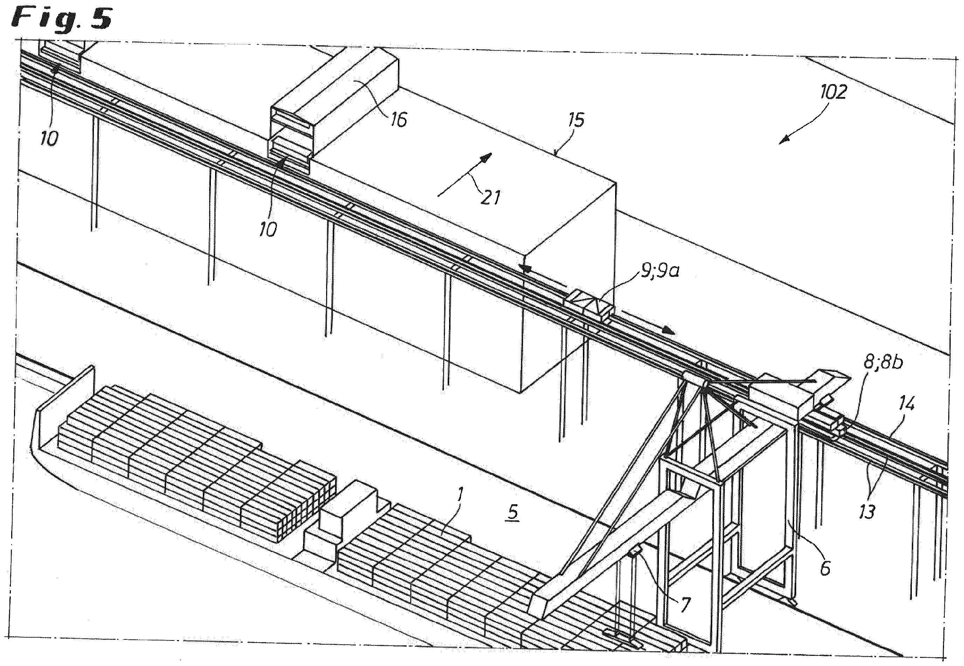

- Figur 5: in einer perspektivischen Teilansicht von oben gesehen eine Container-Umschlaganlage mit einem Hochregallager und auf parallelen Schienen-Fahrbahnen vor der Zuförderseite des Hochregallagers verfahrbaren und positionierbaren Fahrzeugen, hier in einer Ausführung des direkt angrenzend zum Hochregallager angeordneten Endverteilerwagens in einer Bauweise wie in den Figuren 1 und 2 dargestellt;

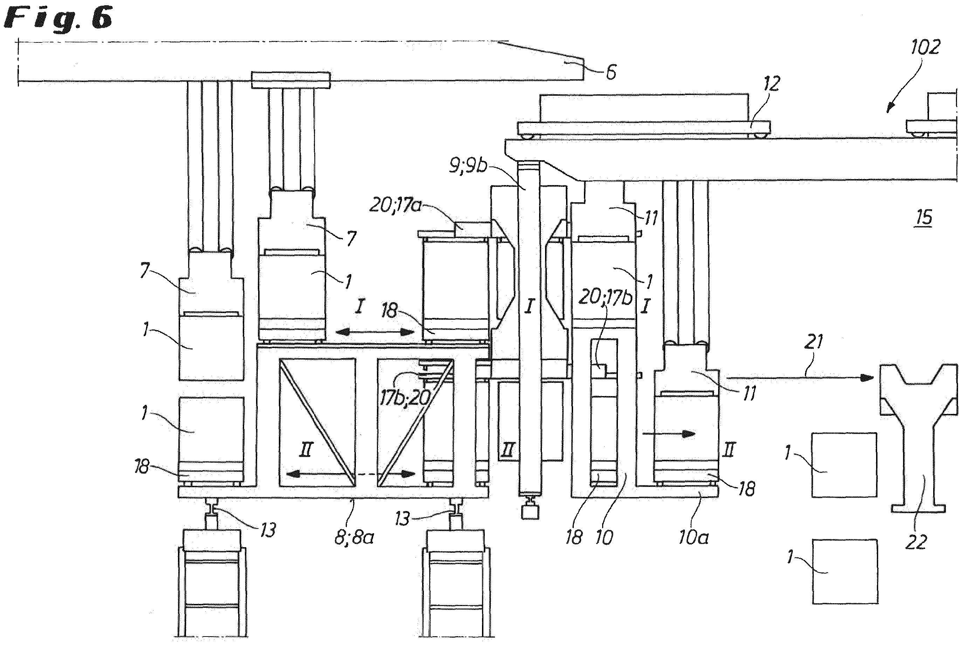

- Figur 6: als Einzelheit einer Container-Umschlaganlage mit einem Hochregallager in der Bauweise nach den Figuren 3 und 4 das Zusammenspiel von Verladebrücke, Übernahmewagen, Endverteilerwagen in der Bauweise als Regalbediengerät, stationärer Transferstation und Lagerkran in einer Seitenansicht; und

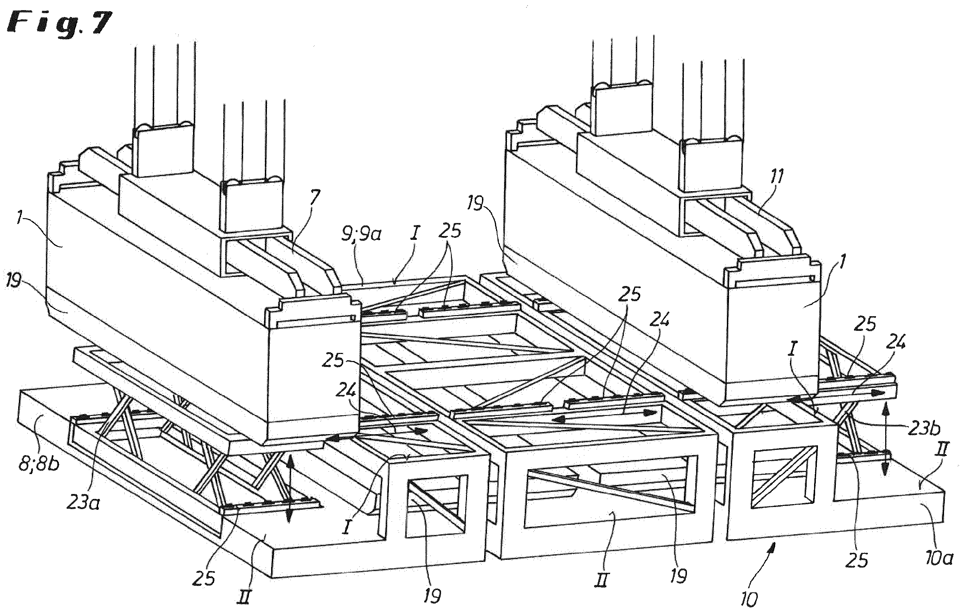

- Figur 7: in einer perspektivischen Draufsicht als Einzelheit der ContainerUmschlaganlage der Figuren 1 und 2 oder 5 das Zusammenspiel von Übernahmewagen, einem in einer Kastenbauweise ausgeführtem Endverteilerwagen und stationärer Transferstation.

Zum Umschlag von Container 1 von einem Schiff auf Land und umgekehrt ist in den Figuren 1 und 2 eine Container-Umschlaganlage 2 mit einem Blocklager 3, von dem nur eine von mehreren im Abstand nebeneinander liegenden Ladeeinheiten gezeigt ist, dargestellt. Die Container 1 werden von einer auf einer Schienen-fahrbahn 4 im Kaiboden 5 vor dem Schiff positionierbaren Verladebrücke 6 von deren Lastaufnahmemittel 7 entnommen, auf einen Übernahmewagen 8 abgestellt, von diesem auf ein Endverteilerfahrzeug 9 übergeleitet, das in der Ausführung nach den Figuren 1, 2 sowie 5 und 7 als flaches Kastenbauweisefahrzeug 9a ausgebildet ist, zu einer stationären Transferstation 10 des Blocklagers 3 transportiert, in die stationäre Transferstation 10 übergeleitet und dort von einem Hebemittel 11 eines die Lagereinheit des Blocklagers 3 überspannenden Lagerkrans 12 abgenommen und eingelagert, wozu der Lagerkran 12 in Richtung der Längserstreckung des Blocklagers bzw. der Lagereinheit und somit quer zum Blocklager 3 verfahrbar ist. Die Schiffsbeladung erfolgt in umgekehrter Reihenfolge. Der Übernahmewagen 8 ist ebenso wie das Endverteilerfahrzeug 9 auf an der Zuförderseite des Blocklagers 3 parallel zu dem Block- bzw. Containerlager verlaufenden Schienenbahnen 13 bzw. 14 angeordnet, wobei die Schienenbahn 14 des Endverteilerfahrzeugs 9, 9a unmittelbar angrenzend an die stationäre Transferstation 10, von denen im Abstand verteilt mehrere nebeneinander liegend vorgesehen sind, verläuft.

Die Container-Umschlaganlage 102 der Figuren 3, 4 und 5 ist mit einem Hochregallager 15 als Containerlager ausgebildet und die Schienenbahnen 13, 14 für den Übernahmewagen 8 und das in der Ausführung nach den Figuren 3 und 4 als Regalbediengerät 9b (vergleiche auch Figur 6) ausgebildete Endverteilerfahrzeug 9 sind hochgeständert angeordnet. Die stationären Transferstationen 10 sind auf den beiden obersten Etagen des Hochregallagers 15 in den Stahlbau integriert. Der Lagerkran bzw. die Lagerkrane 12 werden von Dachaufbauten 16 eingekammert und bestreichen die Lagergassen übergreifend alle im Abstand voneinander getrennt in der Zeichnungsebene nach hinten aufeinanderfolgend angeordneten, mehrgeschossigen Regalfach-Einbauten. Bei Container-Umschlaganlagen 102 mit Hochregallagern 15 entfällt ein bodengebundener Transport. Ansonsten stimmen die Umschlag-Abläufe überein. Denn mittels der Verladebrücken 6 werden die Container 1 vom Schiff auf den Übernahmewagen 8 verbracht, dort auf die variabel hin- und her verfahrbaren Endverteilerfahrzeuge 9; 9a, 9b übergeleitet, von diesen bis vor eine freie stationäre Transferstation 10 verfahren und in die Transferstation übergeleitet, aus der die Container 1 von dem Lagerkran 12 übernommen und im Blocklager 3 eingelagert werden bzw. von dem Lagerkran 12 des Hochregallagers 15 an in den Lagergassen schienengebundenen verfahrbare Regalbediengeräte abgegeben werden, die dann die lagerseitige Verteilung der Container in die Regalfächer übernehmen.

Die Figur 4, in der die den Übernahmewagen 8, 8a zugeordneten Verladebrücken nicht gezeigt sind, lässt die durch die Entkopplung der Funktionen von Übernahmewagen 8, Endverteilerfahrzeug 9 - hier in Form von Regelbediengeräten 9b - und stationären Transferstationen 10 mit der Möglichkeit der direkten Anbindung dieser Komponenten zu erreichende, flexible Handhabung der Container 1 erkennen. Während von den einzulagernden Containern freigemachte Übernahmewagen 8; 8a zur erneuten Ladung bereitstehen, geben andere Übernahmewagen die Container an die Endverteilerfahrzeuge 9; 9b ab bzw. können beladene Endverteilerfahrzeuge die Container auf stationäre Transferstationen 10 überleiten. Der hiermit schon deutlich beschleunigte Container-Umschlag bietet eine nochmals gesteigerte Gesamtdurchsatzleistung dadurch, dass der Übernahmewagen 8; 8a, 8b, das Endverteilerfahrzeug 9; 9a, 9b und die stationäre Transferstation 10; 10a, 10b mit jeweils einer oberen Ebene I und einer unteren Ebene II zur Aufnahme von Containern 1 auf beiden Ebenen I, II (vgl. Fig. 6) oder auf der oberen Ebene I, wobei die untere Ebene II zum Rücktransport leerer Paletten genutzt wird (vgl. Fig. 7), ausgebildet sind.

Der Übernahmewagen 8 nach Figur 6 ist als Zwei-Ebenen-Fahrzeug 8a (vergleiche auch die Figuren 3 und 4) mit gleichbleibendem Abstand der beiden Ebenen I, II zueinander ausgebildet. Dies gilt so gleichermaßen für das Regalbediengerät 9b als Endverteilerfahrzeug 9, dessen Lastaufnahmemittel 17a, 17b mit den daran als Container-Querfördermittel ausgebildeten Teleskopgabeln 20 in ihren vertikalen Positionen zur hängenden Übernahme der Container 1 aus den Ebenen I, II des Übernahmewagens 8; 8a angepasst sind. Schließlich besitzt auch die stationäre Transferstation 10 zur Aufnahme der übergeleiteten Container 1 eine obere und eine untere Ebene I, II, wobei die untere Ebene II einen sich in Richtung des Containerlagers 3; 15 erstreckenden Abschnitt 10a für ein Querfördermittel 18 aufweist.

Die von dem Lastaufnahmemittel 7 der Verladebrücken 6 zugeförderten Container 1 werden in den beiden Ebenen I, II des Übernahmewagens 8; 8a auf Querförderwagen als Querfördermittel 18 abgestellt, bis zum Übergabepunkt an das in Flucht vor den Übernahmewagen 8; 8a positionierte Endverteilerfahrzeug 9; 9b querfördert bzw. verschoben, von wo sie mittels der Teleskopgabeln 20 (vergleiche Figur 4, rechts außen die beiden Regalbediengeräte 9b) hängend von den beiden Ebenen I, II übernommen werden. Die Querförderwagen 18 werden nach der Übernahme der Container 1 durch das Regalbediengerät 9b bzw. Endverteilerfahrzeug 9 zur erneuten Beladung mit Containern 1 in ihre Ausgangsposition zurückgefahren, wie durch die Doppelpfeile in Figur 6 gekennzeichnet. Schon gleich nach der Übernahme der Container 1 kann das Endverteilerfahrzeug 9 bzw. Regalbediengerät 9b in eine fluchtende Position mit den Ebenen I, II einer der stationären Transferstationen 10 verfahren und dort positioniert werden. Durch Richtungsumkehr der Teleskopgabeln 20 werden die Container 1 auf der oberen Ebene I und auf einen Querförderwagen 18 der unteren Ebene II der stationären Transferstation 10 abgestellt. Der Querförderwagen 18 wird auf dem vorspringenden Abschnitt 10a versetzt zu dem auf der oberen Ebene I abgestellten Container verfahren, so dass der Lagerkran 12 mit seinem Hebemittel 11 freien Zugriff zu den Containern 1 der beiden Ebenen I, II hat. In Figur 6 wird durch den Richtungspfeil 21 angedeutet, dass der Lagerkran 12 in einem Hochregallager 15 gassenübergreifend verfahrbar ist und die Container 1 zur Einlagerung in die Regalfächer an in den Gassen, d. h. orthogonal zum Richtungspfeil 21, des Hochregallagers 102 verfahrbare Regalbediengeräte 22 abgibt.

Die Figur 7 zeigt eine andere Bauweise der mit den oberen und unteren Aufnahme- und Förder-Ebenen I, II ausgebildeten Komponenten. Der Übernahmewagen 8 ist als Teilebenen-Absenkungsfahrzeug 8b ausgeführt und besitzt einen aus der oberen Ebene I in die untere Ebene II absenkbaren und umgekehrt anhebbaren Teilebenenabschnitt in Form eines Scherenhubtisches 23a. Auch der vorspringende Querförderabschnitt 10a der stationären Transferstation 10 ist mit einem aus der oberen Ebene I in die untere Ebene II absenkbaren bzw. umgekehrt anhebbaren Scherenhubtisch 23b ausgebildet.

Das Endverteilerfahrzeug 9 ist in einer flachen Kastenbauweise 9a und gleichbleibendem Abstand der beiden Ebenen I bzw. II zueinander ausgeführt. Zum Querfördern der Container 1 sind in den beiden Ebenen I, II aller Komponenten sich ergänzende, wie mit den horizontalen Richtungspfeilen 24 angedeutet ein Fördern in beiden Richtungen ermöglichende Rollen bzw. Rollenbahnen vorgesehen. Bei dieser Bauweise lassen sich die entladenen Paletten 19 im vorspringenden Querförderabschnitt 10a der stationären Transferstation 10 aus der oberen Ebene I in die untere Ebene II absenken und von dort auf die untere Ebene II des Endverteilerfahrzeugs 9 bzw. 9a zurückführen. Sobald das Endverteilerfahrzeug 9, 9a dann vor dem Übernahmewagen 8 bzw. das Teilebenen-Absenkungsfahrzeug 8b positioniert worden ist, kann die vorderste Palette auf den sich in der unteren Ebene II befindenden Scherenhubtisch 23a verbracht und durch Anheben des Scherenhubtisches 23a auf den nicht absenkbaren Teilabschnitt der oberen Ebene I zur erneuten Beladung mit einer Palette 1 bereitgestellt werden. Der Scherenhubtisch 23a wird danach wieder in die untere Ebene II abgesenkt, so dass die nächste Palette übernommen und nach dem Anheben auf die obere Ebene I für eine Folgebeladung zur Verfügung steht. Das Endverteilerfahrzeug 9 dient in der Kastenbauweise 9a damit zusätzlich zur Containerverteilung auch als Bindeglied für einen geschlossenen Paletten-Kreislauf, nämlich einerseits im Zusammenspiel mit der stationären Transferstation 10 und andererseits dem Übernahmewagen 8 bzw. 8b, wobei die Palettenrückführung nach der vertikalen Absenkung ausschließlich in den unteren Ebenen II und der horizontale Querfördertransport der auf Paletten abgestellten Container nur in bzw. auf den oberen Ebenen der Komponenten stattfindet.

### Bezugszeichenliste

- 1: Container
- 2, 102: Container-Umschlaganlage
- 3: Blocklager / Containerlager
- 4: Schienen-Fahrbahn / Schienen
- 5: Kaiboden
- 6: Verladebrücke
- 7: Lastaufnahmemittel
- 8: Übernahmewagen
- 8a: Zwei-Ebenen-Fahrzeug
- 8b: Teilebenen-Absenkungsfahrzeug
- 9: Endverteilerfahrzeug
- 9a: Kastenbauweisefahrzeug
- 9b: Regalbediengerät
- 10: stationäre Transferstation
- 10a: vorderer Abschnitt / vorspringender Querförderabschnitt
- 11: Hebemittel
- 12: Lagerkran
- 13: Schienenbahn / Schienen
- 14: Schienenbahn / Schienen
- 15: Hochregallager / Containerlager
- 16: Dachaufbau
- 17a, 17b: Lastaufnahmemittel (des Regalbediengerätes 9b)
- 18: Querförderwagen
- 19: Palette
- 20: Teleskoparm bzw. -gabel / Container-Querfördermittel
- 21: Richtungspfeil
- 22: Regalbediengerät
- 23a, 23b: Scherenhubtisch / Hubmittel
- 24: horizontaler Richtungspfeil
- 25: Rollen bzw. Rollenbahn / Paletten-Querfördermittel

- I: obere Aufnahme- und Förder-Ebene
- II: untere Aufnahme- und Förder-Ebene

## Patentansprüche

1. Verfahren zum Ein- und Auslagern oder Umlagern von Containern (1) in Hochregal- oder Blocklagern (3, 15) eines See- oder Binnenhafens innerhalb einer Container-Umschlaganlage (2, 102) mit integriertem, vollautomatischem Containertransportsystem, umfassend zum Umschlag der Container (1) von einem Schiff auf Land und umgekehrt mindestens eine Verladebrücke (6) und mindestens einen Lagerkran (12), mit dem Container (1) im Lager (3, 15) ein- und ausgelagert oder umgelagert werden, wobei im Umschlagablauf zwischen der mindestens einen einer Verladebrücke (6) und den Lagerkranen (12) für die Container (1) mehrere Höhenebenen vorgesehen sind,
**dadurch gekennzeichnet, dass**
einzelne Container (1) von der mindestens einen Verladebrücke (6) sukzessive an auf einem zumindest jeweils eine obere und eine untere Aufnahme- und Förder-Ebene (I, II) aufweisenden, parallel zum Containerlager (3, 15) verfahrbaren Übernahmewagen (8; 8a, 8b) bereitgestellte Paletten (19) oder Querförderwagen (18) abgegeben werden, von welchem Übernahmewagen (8; 8a; 8b) die mit einem Container (1) beladenen Paletten (19) durch Paletten-Querfördermittel (25) oder die Container (1) durch die Querförderwagen (18) des Übernahmewagens (8; 8a, 8b) auf ein parallel zum Containerlager (3, 15) verfahrbares, in Linie vor dem Übernahmewagen (8; 8a, 8b) positioniertes, und wie der Übernahmewagen (8; 8a, 8b) eine obere und eine untere Ebene (I, II) aufweisendes Endverteilerfahrzeug (9; 9a, 9b) und von diesem mit Querfördermitteln (20; 25) auf eine stationäre, ebenfalls eine obere und eine untere Ebene (I, II) aufweisende Transferstation (10) des Containerlagers (3, 15) übergeleitet werden, aus der ein Lagerkran (12) die Container (1) zur Einlagerung im Containerlager (3, 15) abhebt.

2. Verfahren nach Anspruch 1,
**dadurch gekennzeichnet, dass**
der Übernahmewagen (8; 8a, 8b) und das Endverteilerfahrzeug (9; 9a, 9b) schienengebunden verfahren werden.

3. Verfahren nach Anspruch 1 oder 2,
**dadurch gekennzeichnet, dass**
bei Ausbildung des Containerlagers als Hochregallager (15) der Übernahmewagen (8; 8a, 8b) und das Endverteilerfahrzeug (9; 9a, 9b) auf hochgeständerten Schienen (13, 14) verfahren werden und die stationäre Transferstation (10) in den beiden obersten Etagen des Hochregallagers (15) vorgesehen wird, wobei den beiden Ebenen (I, II) des Übernahmewagens (8; 8a, 8b) entsprechende Übernahmeebenen (I, II) des Endverteilerfahrzeugs (9; 9a, 9b) ortsfest installierte Lastaufnahmemittel (17a, 17b) sein können, oder ein vertikal verstellbares Lastaufnahmemittel des Endverteilerfahrzeugs (9b) auf der jeweils zu bedienenden Ebene (I, II) positioniert wird.

4. Verfahren nach einem der Ansprüche 1 bis 3,
**dadurch gekennzeichnet, dass**
ein vorderer, der Kaiseite zugewandter Abschnitt der Paletten-Querfördermittel (25) des Übernahmewagens (8; 8b) und ein hinterer, in Richtung des Containerlagers (3, 15) weisender Abschnitt der Paletten-Querfördermittel (25) der stationären Transferstation (10) aus der unteren Ebene (II) in die obere Ebene (I) und umgekehrt abgesenkt bzw. angehoben werden können, wobei die Paletten-Querfördermittel (25) sowohl in ihrer abgesenkten als auch angehobenen Endposition in Flucht mit Paletten-Querfördermitteln (25) des zwischengeschalteten Endverteilerfahrzeugs (9; 9a) verlaufen.

5. Verfahren nach Anspruch 4,
**dadurch gekennzeichnet, dass**
leere Paletten (19) nach dem Absenken in die untere Ebene (II) von der stationären Transferstation (10) über die untere Ebene (II) des Endverteilerfahrzeugs (9; 9a) zurück zur unteren Ebene (II) des Übernahmewagens (8; 8b) gefördert werden, wo sie nach dem Anheben in die obere Ebene (I) des Übernahmewagens (8; 8b) mit einem Container (1) neu beladen werden.

6. Container-Umschlaganlage (2, 102) mit integriertem, vollautomatischem Containertransportsystem zum Ein- und Auslagern oder Umlagern von Containern (1) in Hochregal- oder Blocklagern (3, 15) eines See- oder Binnenhafens, umfassend zum Umschlag der Container (1) von einem Schiff auf Land und umgekehrt mindestens eine Verladebrücke (6) und mindestens einen Lagerkran (12), mit dem die Container (1) im Lager (3, 15) ein- und ausgelagert oder umgelagert werden, wobei im Umschlagablauf zwischen einer Verladebrücke (6) und den Lagerkranen (12) für die Container (1) mehrere Höhenebenen vorgesehen sind,
**dadurch gekennzeichnet, dass**
einer Verladebrücke (6) zum Containerlager (3, 15) hin auf jeweils parallel zum Containerlager (3, 15) verlaufenden Fahrbahnen (4; 13, 14) zunächst ein Übernahmewagen (8; 8a, 8b) und angrenzend zum Containerlager (3, 15) mindestens ein Endverteilerfahrzeug (9; 9a, 9b) zugeordnet ist, wobei das Verteilerfahrzeug unabhängig von dem Übernahmewagen verfahrbar und fluchtend zu mindestens einer an der Zuförderseite des Containerlagers (3, 15) ausgebildeten, im Wirkbereich eines Lagerkrans (12) angeordneten, stationären Transferstation (10) positionierbar ist, wobei der Übernahmewagen (8; 8a, 8b), das Endverteilerfahrzeug (9; 9a, 9b) und die stationäre Transferstation (10) jeweils zumindest mit einer oberen und einer unteren Aufnahme- und Föder-Ebene (I, II) und dort vorgesehenen Container- und / oder Paletten-Querfördermitteln (18; 20; 25) ausgebildet sind.

7. Container-Umschlaganlage nach Anspruch 6,
**dadurch gekennzeichnet, dass**
der Übernahmewagen (8; 8a, 8b) und das Endverteilerfahrzeug (9; 9a, 9b) schienengebunden verfahrbar sind, bei Ausbildung des Containerlagers als Hochregallager (15) auf hochgeständerten Schienen (13, 14).

8. Container-Umschlaganlage nach Anspruch 6 oder 7,
**dadurch gekennzeichnet, dass**
die Ebenen (I, II) des Übernahmewagens (8; 8a) in einem starren Abstand zueinander vorgesehen sind und das zugeordnete Endverteilerfahrzeug (9) als Regalbediengerät (9b) mit einem oberen und einem unteren Lastaufnahmemittel (17a, 17b) mit Querfördermitteln (20) oder einem vertikal verstellbaren Lastaufnahmemittel zum aufeinanderfolgenden Abnehmen und Querfördern der Container (1) aus der oberen und unteren Ebene (I, II) des Übernahmewagens ausgebildet ist.

9. Container-Umschlaganlage nach Anspruch 8,
**dadurch gekennzeichnet, dass**
die zugeordnete stationäre Transferstation (10) in der unteren Aufnahmeebene (II) einen gegenüber der oberen Aufnahmeebene (I) in Richtung des Containerlagers (3, 15) vorspringenden Querförderabschnitt (10a) aufweist.

10. Container-Umschlaganlage nach einem der Ansprüche 6 bis 7 und 9,
**dadurch gekennzeichnet, dass**
der Übernahmewagen (8; 8b) mit einer zweigeteilten oberen Ebene (I) ausgebildet ist und einen auf der oberen in die untere Ebene (II) und umgekehrt absenkbaren vorderen Teilebenenabschnitt aufweist, wobei der zugeordnete Endverteilerwagen (9; 9a) mit einer die vom Übernahmewagen (8, 8b) zugeförderten Container (1) aufnehmenden, durchgehenden oberen Ebene (I) und der vorspringende Querförderabschnitt (10a) der stationären Transferstation (10) mit einem aus der oberen in die untere Ebene (I, II) und umgekehrt absenkbaren Hubmittel (23a, 23b) ausgebildet ist.

11. Container-Umschlaganlage nach Anspruch 10,
**dadurch gekennzeichnet, dass**
der vordere Teilebenenabschnitt des Übernahmewagens (8, 8b) und der vorspringende Querförderabschnitt (10a) der stationären Transferstation (10) mit Scherenhubtischen (23a, 23b) ausgeführt sind.

12. Container-Umschlaganlage nach einem der Ansprüche 6 bis 11,
**dadurch gekennzeichnet, dass**
die abgesetzte Container (1) transportierenden Querfördermittel als Querförderwagen (18) oder die die auf Paletten (19) abgesetzten Container (1) transportierenden Querfördermittel als Rollen bzw. Rollenbahnen (25) ausgebildet sind.

## Claims

1. A method for placing containers (1) into and removing containers from or transferring containers in high-bay or block stores (3, 15) of a seaport or inland port within a container transloading facility (2, 102) having an integrated, fully automatic container transport system, comprising at least one loading gantry (6), for the transloading of the containers (1) from a ship to land and vice versa, and at least one store crane (12), with which containers (1) are placed into and removed from or transferred in the store (3, 15), multiple height levels being provided for the containers (1) in the transloading process between the at least one loading gantry (6) and the store cranes (12),
**characterised in that**
individual containers (1) are deposited by the at least one loading gantry (6) successively onto pallets (19) or cross-conveying trolleys (18) provided on a transfer wagon (8; 8a, 8b) which has at least an upper and a lower receiving and conveying level (I, II) and can be moved parallel to the container store (3, 15), from which transfer wagon (8; 8a; 8b) the pallets (19) loaded with a container (1) are moved by means of pallet cross-conveyors (25) or the containers (1) are moved by means of the cross-conveying trolleys (18) of the transfer wagon (8; 8a, 8b) onto an end distribution vehicle (9; 9a, 9b), which can be moved parallel to the container store (3, 15) and is positioned in line in front of the transfer wagon (8; 8a, 8b) and, like the transfer wagon (8; 8a, 8b), has an upper and a lower level (I, II), and are moved by means of cross-conveyors (20; 25) from said end distribution vehicle onto a stationary transfer station (10) of the container store (3, 15), which transfer station likewise has an upper and a lower level (I, II) and from which a store crane (12) lifts the containers (1) in order to place them into storage in the container store (3, 15).

2. The method according to Claim 1,
**characterised in that**
the transfer wagon (8; 8a, 8b) and the end distribution vehicle (9; 9a, 9b) are moved on rails.

3. The method according to Claim 1 or 2,
**characterised in that**
if the container store is in the form of a high-bay store (15), the transfer wagon (8; 8a, 8b) and the end distribution vehicle (9; 9a, 9b) are moved on elevated rails (13, 14), and the stationary transfer station (10) is provided in the top two tiers of the high-bay store (15), wherein receiving levels (I, II) of the end distribution vehicle (9; 9a, 9b) corresponding to the two levels (I, II) of the transfer wagon (8; 8a, 8b) can be load-handling means (17a, 17b) installed in a fixed location, or a vertically movable load-handling means of the end distribution vehicle (9b) is positioned at the level (I, II) to be used in each case.

4. The method according to any one of Claims 1 to 3,
**characterised in that**
a front section, facing the quay side, of the pallet cross-conveyors (25) of the transfer wagon (8; 8b) and a rear section, facing in the direction of the container store (3, 15), of the pallet cross-conveyors (25) of the stationary transfer station (10) can be lowered and raised from the lower level (II) to the upper level (I) and vice versa, wherein the pallet cross-conveyors (25), both in the lowered end position and the raised end position, are aligned with pallet cross-conveyors (25) of the interposed end distribution vehicle (9; 9a).

5. The method according to Claim 4,
**characterised in that**
empty pallets (19), after being lowered into the lower level (II) from the stationary transfer station (10) via the lower level (II) of the end distribution vehicle (9; 9a) are conveyed back to the lower level (II) of the transfer wagon (8; 8b), where, after being raised into the upper level (I) of the transfer wagon (8; 8b), they are reloaded with a container (1).

6. A container transloading facility (2, 102) having an integrated, fully automatic container transport system, for placing containers (1) into and removing containers from or transferring containers in high-bay or block stores (3, 15) of a seaport or inland port, comprising at least one loading gantry (6), for the transloading of the containers (1) from a ship to land and vice versa, and at least one store crane (12), with which the containers (1) are placed into and removed from or transferred in the store (3, 15), multiple height levels being provided for the containers (1) in the transloading process between a loading gantry (6) and the store cranes (12),
**characterised in that**
towards the container store (3, 15), on tracks (4; 13, 14) each running parallel to the container store (3, 15), a loading gantry (6) is assigned first a transfer wagon (8; 8a, 8b) and, adjacent to the container store (3, 15), at least one end distribution vehicle (9; 9a, 9b), wherein the distribution vehicle can be moved independently of the transfer wagon and can be positioned in alignment with at least one stationary transfer station (10) formed on the feed side of the container store (3, 15) and situated in the working area of a store crane (12), wherein the transfer wagon (8; 8a, 8b), the end distribution vehicle (9; 9a, 9b) and the stationary transfer station (10) are each formed at least with an upper and a lower receiving and conveying level (I, II) and container cross-conveyors and/or pallet cross-conveyors (18; 20; 25) provided there.

7. The container transloading facility according to Claim 6,
**characterised in that**
the transfer wagon (8; 8a; 8b) and the end distribution vehicle (9; 9a, 9b) are movable on rails, on elevated rails (13, 14) if the container store is in the form of a high-bay store (15).

8. The container transloading facility according to Claim 6 or 7,
**characterised in that**
the levels (I, II) of the transfer wagon (8; 8a) are provided at a fixed distance from one another, and the assigned end distribution vehicle (9) is in the form of a storage and retrieval machine (9b) having an upper and a lower load-handling means (17a, 17b) with cross-conveyors (20) or a vertically movable load-handling means for successively removing and cross-conveying the containers (1) out of the upper and lower levels (I, II) of the transfer wagon.

9. The container transloading facility according to Claim 8,
**characterised in that**
the assigned stationary transfer station (10) has in the lower receiving level (II) a cross-conveying section (10a) which protrudes in the direction of the container store (3, 15) relative to the upper receiving level (I).

10. The container transloading facility according to any one of Claims 6 to 7 and 9,
**characterised in that**
the transfer wagon (8; 8b) is formed with an upper level (I) divided into two and has a front part-level section which can lowered from the upper into the lower level (II) and vice versa, wherein the assigned end distribution wagon (9; 9a) is formed with a continuous upper level (I) which receives the containers (1) fed by the transfer wagon (8, 8b), and the protruding cross-conveying section (10a) of the stationary transfer station (10) is formed with a lift means (23a, 23b) which can be lowered from the upper into the lower level (I, II) and vice versa.

11. The container transloading facility according to Claim 10,
**characterised in that**
the front part-level section of the transfer wagon (8, 8b) and the protruding cross-conveying section (10a) of the stationary transfer station (10) are designed with scissor lift platforms (23a, 23b).

12. The container transloading facility according to any one of Claims 6 to 11,
**characterised in that**
the cross-conveyors which transport set-down containers (1) are in the form of cross-conveying trolleys (18), or the cross-conveyors which transport the containers (1) set-down on pallets (19) are in the form of rollers or roller tracks (25).

## Revendications

1. Procédé, destiné à stocker et à déstocker ou à transborder des conteneurs (1) dans des entrepôts à hauts rayonnages ou des entrepôts en vrac (3, 15) d'un port maritime ou d'un port fluvial, à l'intérieur d'une installation de transbordement de conteneurs (2, 102), pourvue d'un système de convoyage de conteneurs entièrement automatique intégré, comprenant pour le transbordement des conteneurs (1) d'un navire sur la terre ferme ou inversement au moins un pont de chargement (6) et au moins un portique de stockage (12), à l'aide duquel des conteneurs (1) peuvent être stockés et déstockés dans l'entrepôt (3, 15) ou transbordés, dans le cycle du transbordement, entre l'au moins un pont de chargement (6) et les portiques de stockage (12) étant prévus plusieurs niveaux élevés pour les conteneurs (1), **caractérisé en ce que** des conteneurs (1) isolés sont distribués successivement de l'au moins un pont de chargement (6) (I, II) à des palettes (19) ou chariots de convoyage transversal (18) mis(es) à disposition sur un chariot de reprise (8 ; 8a, 8b) comportant au moins respectivement un niveau de réception et de convoyage supérieur et inférieur (I, II), déplaçable à la parallèle de l'entrepôt pour conteneurs (3, 15), à partir duquel chariot de reprise (8 ; 8a ; 8b), les palettes (19) chargées d'un conteneur (1) sont transférées par des moyens de convoyage transversal de palettes (25) ou les conteneurs (1) sont transférés par les chariots de convoyage transversal (18) des chariot de reprise (8 ; 8a, 8b) sur un véhicule distributeur final (9 ; 9a, 9b) déplaçable à la parallèle de l'entrepôt pour conteneurs (3, 15), positionné en ligne à l'avant du chariot de reprise (8 ; 8a, 8b) et comme le chariot de reprise (8 ; 8a, 8b), comportant un niveau (I, II) supérieur et inférieur et à partir de celui-ci, par des moyens de convoyage transversal (20 ; 25) sur un poste de transfert (10) comportant également un niveau supérieur et inférieur (I, II) de l'entrepôt pour conteneurs (3, 15), à partir duquel un portique de stockage (12) soulève les conteneurs (1) pour leur stockage dans l'entrepôt pour conteneurs (3, 15).

2. Procédé selon la revendication 1, **caractérisé en ce que** le chariot de reprise (8 ; 8a, 8b) et le véhicule distributeur final (9 ; 9a, 9b) se déplacent sur des rails.

3. Procédé selon la revendication 1 ou 2, **caractérisé en ce que** dans le cas d'une conception de l'entrepôt pour conteneurs sous la forme d'un entrepôt à hauts rayonnages (15), le chariot de reprise (8 ; 8a, 8b) et le véhicule distributeur final (9; 9a, 9b) se déplacent sur des rails surélevés (13, 14) et le poste de transfert (10) est prévu dans les deux étages supérieurs de l'entrepôt à hauts rayonnages (15), des niveaux de reprise (I, II) du véhicule distributeur final (9 ; 9a, 9b) correspondant aux deux niveaux (I, II) du chariot de reprise (8 ; 8a, 8b) pouvant être des moyens de reprise de charge (17a, 17b) installés de manière stationnaire ou un moyen de reprise de charge réglable à la verticale du véhicule distributeur final (9b) étant positionné sur le niveau (I, II) qui doit être respectivement desservi.

4. Procédé selon l'une quelconque des revendications 1 à 3, **caractérisé en ce qu'**une portion avant, faisant face au côté quai des moyens de convoyage transversal de palettes (25) du chariot de reprise (8 ; 8b) et une portion arrière, orientée en direction de l'entrepôt pour conteneurs (3, 15) des moyens de convoyage transversal de palettes (25) du poste de transfert (10) peuvent s'abaisser ou se relever du niveau inférieur (II) au niveau supérieur (I) et inversement, aussi bien dans leur position finale abaissée qu'également relevée, les moyens de convoyage transversal de palettes (25) étant alignés sur des moyens de convoyage transversal de palettes (25) du véhicule distributeur final (9 ; 9a) interposé.

5. Procédé selon la revendication 4, **caractérisé en ce qu'**après l'abaissement au niveau inférieur (II), des palettes (19) vides sont convoyées à partir du poste de transfert (10) stationnaire, par l'intermédiaire du niveau inférieur (II) du véhicule distributeur final (9 ; 9a) en retour vers le niveau inférieur (II) du chariot de reprise (8 ; 8b), où après leur relèvement au niveau supérieur (I) du chariot de reprise (8 ; 8b), elles sont rechargées avec un conteneur (1).

6. Installation de transbordement de conteneurs (2, 102), pourvue d'un système de convoyage de conteneurs entièrement automatique intégré, destinée à stocker et à déstocker ou à transborder des conteneurs (1) dans des entrepôts à hauts rayonnages ou des entrepôts en vrac (3, 15) d'un port maritime ou d'un port fluvial, comprenant, pour le transbordement der conteneurs (1) d'un navire sur la terre ferme ou inversement au moins un pont de chargement (6) et au moins un portique de stockage (12), à l'aide duquel des conteneurs (1) peuvent être stockés et déstockés dans l'entrepôt (3, 15) ou transbordés, dans le cycle du transbordement, entre l'au moins un pont de chargement (6) et les portiques de stockage (12) étant prévus plusieurs niveaux élevés pour les conteneurs (1), **caractérisée en ce qu'**à un pont de chargement (6), en direction de l'entrepôt pour conteneurs (3, 15), sur des trajectoires de circulation (4 ; 13, 14) s'écoulant à la parallèle de l'entrepôt pour conteneurs (3, 15) est associé d'abord un chariot de reprise (8 ; 8a, 8b) et de manière adjacente à l'entrepôt pour conteneurs (3, 15), au moins un véhicule distributeur final (9 ; 9a, 9b), le véhicule distributeur étant positionnable en étant déplaçable indépendamment du chariot de reprise et en alignement sur au moins un poste de transfert (10) stationnaire, conçu sur le côté d'amenée de l'entrepôt pour conteneurs (3, 15) et placé dans la zone d'action d'un portique de stockage (12), le chariot de reprise (8; 8a, 8b), le véhicule distributeur final (9; 9a, 9b) et le poste de transfert (10) stationnaire étant conçus chacun avec au moins un niveau de réception et de convoyage (I, II) supérieur et inférieur et avec moyens de convoyage transversal de conteneurs et / ou de palettes (18 ; 20 ; 25) qui y sont prévus.

7. Installation de transbordement de conteneurs selon la revendication 6, **caractérisée en ce que** le chariot de reprise (8 ; 8a, 8b) et le véhicule distributeur final (9 ; 9a, 9b) sont déplaçables sur des rails, dans le cas d'une conception de l'entrepôt pour conteneurs sous la forme d'un entrepôt à hauts rayonnages (15), sur des rails surélevés (13, 14).

8. Installation de transbordement de conteneurs selon la revendication 6 ou 7, **caractérisée en ce que** les niveaux (I, II) du chariot de reprise (8 ; 8a) sont prévus avec un écart mutuel rigide et le véhicule distributeur final (9) associé est conçu sous la forme d'un transstockeur (9b), pourvu d'un moyen de reprise de charge supérieur et inférieur (17a, 17b) avec des moyens de convoyage transversal (20) ou avec un moyen de reprise de charge réglable à la verticale pour consécutivement reprendre et convoyer à la transversale les conteneurs (1) à partir du niveau supérieur et inférieur (I, II) du chariot de reprise.

9. Installation de transbordement de conteneurs selon la revendication 8, **caractérisée en ce que** le poste de transfert (10) stationnaire associé comporte dans le niveau de reprise inférieur (II) un tronçon de convoyage transversal (10a) saillant dans la direction de l'entrepôt pour conteneurs (3, 15), par rapport au niveau de reprise supérieur (I).

10. Installation de transbordement de conteneurs selon l'une quelconque des revendications 6 à 7 et 9, **caractérisée en ce que** le chariot de reprise (8 ; 8b) est conçu avec un niveau supérieur (I) divisé en deux et comporte une portion avant de niveau partiel susceptible d'être abaissée du niveau supérieur dans le niveau inférieur (II) et inversement, le chariot distributeur final (9 ; 9a) associé étant conçu avec un niveau supérieur (I) traversant, reprenant les conteneurs (1) amenés par le chariot de reprise (8, 8b) et le tronçon de convoyage transversal (10a) saillant du poste de transfert (10) stationnaire étant conçu avec un moyen de levage (23a, 23b) susceptible d'être abaissé du niveau supérieur au niveau inférieur (I, II) et inversement.

11. Installation de transbordement de conteneurs selon la revendication 10, **caractérisée en ce que** la portion avant de niveau partiel du chariot de reprise (8, 8b) et le tronçon de convoyage transversal (10a) saillant du poste de transfert (10) stationnaire sont réalisés avec des tables élévatrices à ciseaux (23a, 23b).

12. Installation de transbordement de conteneurs selon l'une quelconque des revendications 6 à 11, **caractérisée en ce que** les moyens de convoyage transversal transportant des conteneurs (1) déposés sont conçus sous la forme de chariots de convoyage transversal (18) ou les moyens de convoyage transversal transportant les conteneurs (1) déposés sur des palettes (19) sont conçus sous la forme de rouleaux ou de transrouleurs (25).
